# EUROPEAN PATENT APPLICATION

(11) **EP 2 495 849 A2**
(43) Date of publication of application: **05.09.2012**
(21) Application number: 12157974.2
(22) Date of filing: 02.03.2012
(51) Int. Cl.: H02K 9/18

(54) **Rotating machine with heat exchanger**

(30) Priority: 04.03.2011 US 201113041000
(71) Applicant: General Electric Company, Schenectady, NY 12345 (US)
(72) Inventor: Gardas, Ravindra Gopal, 500081 Pradesh (IN); Darbha, Radhakrishna Venkateswarlu, 500081 Pradesh (IN)
(74) Representative: Illingworth-Law, William Illingworth

(57) **Abstract**

A rotating machine apparatus (10) is provided and includes a rotating machine (30) to drive rotation of a shaft (35), at least one air flow generator (40) mounted on the shaft, a heat exchanger (50) disposed in thermal communication with the rotating machine (30) and being formed to define a plurality of pathways (30) displaced from and extending transversely with respect to the at least one air flow generator (40) and a duct (60) having first and second transverse sections (61, 62) by which the at least one air flow generator (40) and the heat exchanger (50) are coupled.

## Description

### BACKGROUND OF THE INVENTION

The subject matter disclosed herein relates to a rotating machine apparatus.

In various industries, rotating machines are employed in many different applications. Rotating machines can be used to generate power and electricity and they can be employed in automobile engines, aircraft engines and air conditioners. In most cases, however, the operation of rotating machines creates a substantial amount of heat that must be dissipated in order to insure continued operation. This can be achieved for a given rotating machine by placing a heat exchanger in thermal communication with the rotating machine.

Such a heat exchanger works by defining a heat flow pathway along heat transfer elements that extend from the relatively hot rotating machine to a relatively cool heat sink, such as atmospheric surroundings or an air flow. The air flow can be generated by movement of the rotating machine and the heat exchanger through atmospheric surroundings or by a blowing element disposed proximate to the heat exchanger.

The blowing element can include, for example, a fan. In general, the fan may be mounted to a shaft that is driven to rotate by the rotating machine or an external blower that is separate from the heat exchanger. In either case, the fan generates the air flow in alignment with the heat transfer elements. Alternatively, the fan may be an external blower that is separate from the heat exchanger and generates the air flow as a cross-flow relative to the heat transfer elements. In any case, each of the three arrangements present shortcomings, such as temperature differentials at rotating machine ends, pressure drops through the heat transfer elements, large numbers of parts, significant amounts of required maintenance, customer dissatisfaction and high costs.

### BRIEF DESCRIPTION OF THE INVENTION

According to one aspect of the invention, a rotating machine apparatus is provided and includes a rotating machine to drive rotation of a shaft, at least one air flow generator mounted on the shaft, a heat exchanger disposed in thermal communication with the rotating machine and being formed to define a plurality of pathways displaced from and extending transversely with respect to the at least one air flow generator and a duct having first and second transverse sections by which the at least one air flow generator and the heat exchanger are coupled.

According to another aspect of the invention, a rotating machine apparatus is provided and includes a housing having first and second opposing end walls, a rotating machine disposed within the housing to drive rotation of a shaft, a cross-flow fan mounted on the shaft proximate to one of the first and second end walls, a heat exchanger disposed in thermal communication with the rotating machine and being formed to define a plurality of pathways displaced from and extending transversely with respect to an axis of the cross-flow fan and a duct having first and second transverse sections by which the cross-flow fan and the heat exchanger are fluidly coupled.

According to yet another aspect of the invention, a rotating machine apparatus is provided and includes a housing having first and second opposing end walls and first and second opposing side walls extending between the first and second opposing end walls, a rotating machine disposed within the housing to drive rotation of a shaft, a cross-flow fan mounted on the shaft proximate to one of the first and second end walls, a heat exchanger disposed in thermal communication with the rotating machine and including an inlet disposed at an end of the first side wall, an outlet disposed at a corresponding end of the second side wall and a plurality of tubes coupled to the inlet and the outlet to define a plurality of pathways displaced from and extending transversely with respect to an axis of the cross-flow fan and a duct having first and second transverse sections by which the cross-flow fan and the inlet are fluidly coupled.

These and other advantages and features will become more apparent from the following description taken in conjunction with the drawings.

### BRIEF DESCRIPTION OF THE DRAWING

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:

FIG. 1 is a perspective view of a rotating machine apparatus;

FIG. 2 is an enlarged view of a double entry fan;

FIG. 3 is a plan view of the rotating machine apparatus of FIG. 1 according to an alternative embodiment; and

FIG. 4 is a perspective view of a rotating machine apparatus according to further embodiments.

The detailed description explains embodiments of the invention, together with advantages and features, by way of example with reference to the drawings.

### DETAILED DESCRIPTION OF THE INVENTION

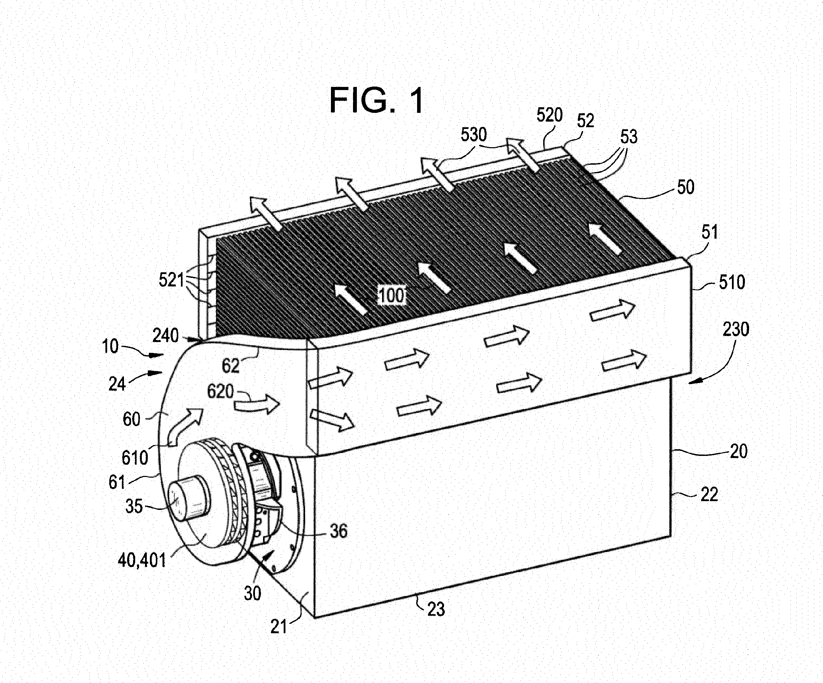

With reference to FIGS. 1-4, a rotating machine apparatus 10 is provided and includes a housing 20, a rotating machine 30, an air flow generator, such as a cross-flow fan 40, a heat exchanger 50 and a duct 60. The housing 20 has first and second opposing end walls 21, 22 and at least first and second opposing side walls 23, 24 extending between the first and second end walls 21, 22 to form a volumetric enclosure. As shown in FIG. 1, this volumetric enclosure may be substantially rectangular or any other similar shape. The rotating machine 30 is disposed within the volumetric enclosure of the housing 20 and an operation thereof drives rotation of a rotatable shaft 35. The rotatable shaft 35 extends through the first and second end walls 21, 22 and may be rotatably supported by the rotating machine 30 and/or by bearing assemblies 36. The cross-flow fan 40 may be singular or plural in number and is mounted on the rotatable shaft 35 at an axial location proximate to one or both of the first and second end walls 21, 22. The heat exchanger 50 is disposed in thermal communication with the rotating machine 30 and includes an inlet 51 disposed at an end 230 of the first side wall 23, an outlet 52 disposed at a corresponding end 240 of the second side wall 24 and a plurality of tubes 53. Each of the plurality of tubes 53 is coupled to the inlet 51 and the outlet 52 to define a plurality of pathways 530. The pathways 530 are displaced from and disposed to extend transversely with respect to an axis of the cross-flow fan 40. The duct 60 has first and second transverse sections 61, 62 by which the cross-flow fan 40 and either the inlet 51 or the outlet 52 are fluidly coupled.

As used herein, the axis of the cross-flow fan 40 may refer to the rotational axis of the rotatable shaft 35 and the cross-flow fan 40 and/or any axis oriented substantially in parallel with the rotational axis that is confined within the radial extent of the cross-flow fan 40.

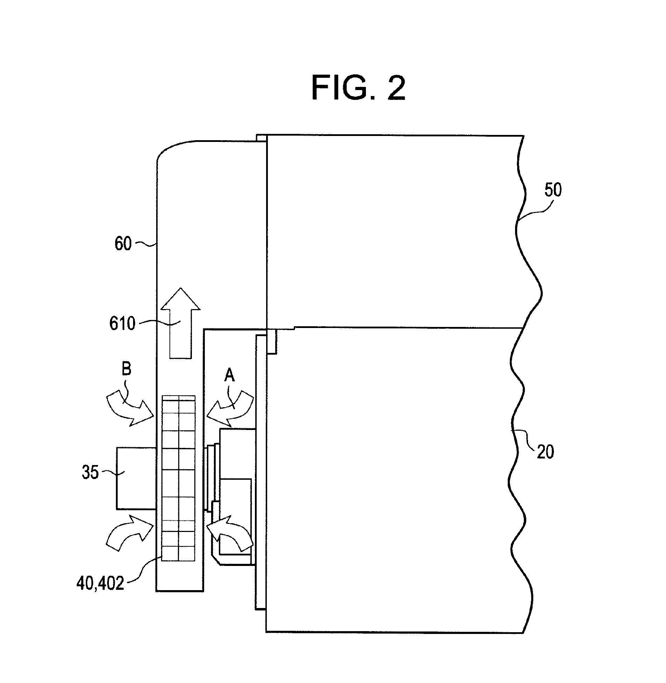

As shown in FIG. 1, the cross-flow fan 40 may be rotatable in first and second opposite directions. The cross-flow fan 40 may include a single entry/exit cross-flow fan 401. In this case, rotation of the rotatable shaft 35 in a predefined direction pulls in air flow from one direction (see, for example, only direction A of FIG. 2) whereas opposite rotation of the rotatable shaft 35 outputs air flow along the one direction. By contrast, with reference to FIG. 2, the cross-flow fan 40 may include a double entry/exit cross-flow fan 402. In this case, rotation of the rotatable shaft 35 in a predefined direction pulls in air flow from two directions (direction A and opposite direction B) whereas opposite rotation of the rotatable shaft 35 outputs air flow along the two directions.

Still referring to FIG. 1, the heat exchanger 50 further includes an inlet housing 510, which is fluidly coupled to the duct 60 to form the inlet 51, and an outlet housing 520, which is disposed in communication with an exterior to form the outlet 52. The outlet housing 520 may include vanes 521 for directing outlet flow. The inlet and the outlet housings 510, 520 are substantially similarly shaped and substantially parallel with one another. They may also be substantially parallel with the first and second side walls 23, 24. The plurality of tubes 53 are arranged between the inlet and the outlet housings 510, 520 in a substantially rectangular matrix.

The material of the plurality of tubes 53, the inlet housing 510, the outlet housing 520, the housing 20 and the rotating machine 30 are disposed in contact with and in thermal communication with one another such that a heat flow pathway is defined from the rotating machine 30 to the plurality of tubes 53. Thus, as the cross-flow fan 40 generates an air flow, either by blowing air or by suction, the air flow proceeds through the duct 60 and the plurality of tubes 53. Thus, heat that is generated by the rotating machine 30 may be absorbed by the flowing air to thereby lower a temperature of at least the rotating machine 30.

In accordance with embodiments, the first duct section 61 encompasses the cross-flow fan 40. In accordance with further embodiments, the first and second transverse sections 61, 62 of the duct 60 may be formed to define first and second curved pathways 610, 620 in which the respective curvatures are oriented transversely with respect to one another.

As shown in FIG. 1, the arrangement described above may define a first air flow pathway 100 with the rotatable shaft 35 rotating in a first direction such that the cross-flow fan 40 acts as a blower. In this case, the first air flow pathway 100 proceeds from the cross-flow fan 40, through the duct 60 and to the inlet 51. At the inlet 51, air blown by the cross-flow fan 40 diffuses throughout the inlet housing 510 and proceeds to flow through the plurality of tubes 53 and along the pathways 530. This flow along the pathways 530 proceeds in a substantially uniform manner toward the outlet 52 with little to no pressure drop along the longitudinal axis of the rotatable shaft 35 and little to no pressure drop along the pathways 530.

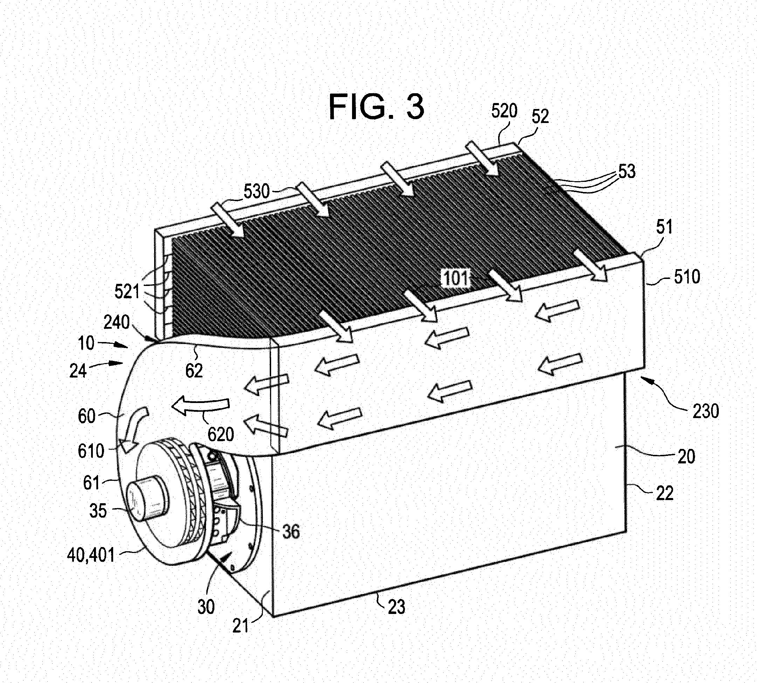

As shown in FIG. 3, the arrangement described above may define a second air flow pathway 101 with the rotatable shaft 35 rotating in a second direction such that the cross-flow fan 40 generates suction. In this case, the second air flow pathway 101 proceeds from the inlet 51, through the duct 60 and to the cross-flow fan 40. At the outlet 52, air pulled in from an exterior by the suction effect diffuses throughout the outlet housing 520 and proceeds to flow through the plurality of tubes 53 and along the pathways 530. Again, this flow along the pathways 530 proceeds in a substantially uniform manner toward the inlet 51 with little to no pressure drop along the longitudinal axis of the rotatable shaft 35 and little to no pressure drop along the pathways 530.

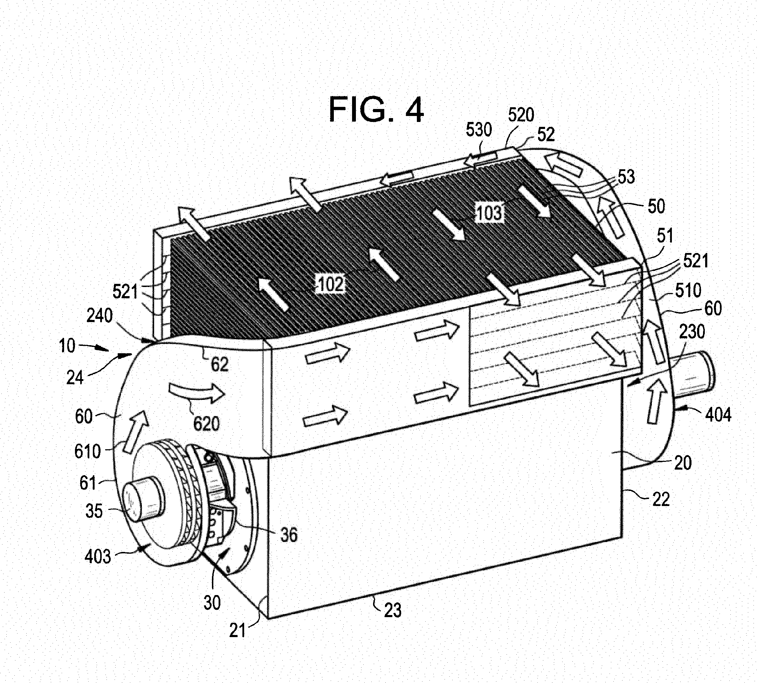

As shown in FIG. 4, the cross-flow fan 40 may further include first cross-flow fan 403 and second cross-flow fan 404, which are each respectively mounted on the rotatable shaft 35 at respective axial locations that are proximate to the first and the second end walls 21, 22, respectively. In this case, various additional air flow pathways may be defined. These include, but are not limited to, combinations of third and fourth air flow pathways 102, 103, whereby air flow flows through one portion of the plurality of tubes 53 in one of first and second directions and through another portion of the plurality of tubes 53 in the other of the first and second directions based on a rotation direction of the rotatable shaft 35. In this case, the inlet 51 is disposed on both sides of the rotatable shaft 35 at different axial locations and the outlet 52 is complementarily disposed on both side of the rotatable shaft 35 at corresponding axial locations. The additional air flow pathways may also be defined by further arrangements whereby air flows through all of the tubes 53 in one of first and second directions based on a rotation direction of the rotations shaft 35.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A rotating machine apparatus, comprising:
   a rotating machine to drive rotation of a shaft;
   at least one air flow generator mounted on the shaft;
   a heat exchanger disposed in thermal communication with the rotating machine and being formed to define a plurality of pathways displaced from and extending transversely with respect to the at least one air flow generator; and
   a duct having first and second transverse sections by which the at least one air flow generator and the heat exchanger are coupled.
2. The rotating machine apparatus according to clause 1, wherein the at least one air flow generator is rotatable in first and second opposite directions and comprises at least one of a single entry cross-flow fan and a double entry cross-flow fan.
3. The rotating machine apparatus according to clause 1 or clause 2, wherein the heat exchanger comprises:
   an inlet housing coupled to the duct; and
   an outlet housing in communication with an exterior of an outlet; and
   a plurality of tubes arranged between the inlet and the outlet housings in a substantially rectangular matrix.
4. The rotating machine apparatus according to any preceding clause, wherein the first section encompasses the at least one air flow generator.
5. The rotating machine apparatus according to any preceding clause, wherein an air flow pathway is one of defined from the at least one air flow generator, through the duct and to the inlet and defined from the inlet, through the duct and to the at least one air flow generator.
6. The rotating machine apparatus according to any preceding clause, wherein the at least one air flow generator comprises first and second cross-flow fans respectively mounted on the shaft proximate to the first and the second end wall, respectively.
7. The rotating machine apparatus according to any preceding clause, wherein the at least one air flow generator comprises a double entry cross-flow fan.
8. A rotating machine apparatus, comprising:
   a housing having first and second opposing end walls;
   a rotating machine disposed within the housing to drive rotation of a shaft;
   a cross-flow fan mounted on the shaft proximate to one of the first and second end walls;
   a heat exchanger disposed in thermal communication with the rotating machine and being formed to define a plurality of pathways displaced from and extending transversely with respect to an axis of the cross-flow fan; and
   a duct having first and second transverse sections by which the cross-flow fan and the heat exchanger are fluidly coupled.
9. The rotating machine apparatus according to any preceding clause, wherein the cross-flow fan comprises at least one of a single entry cross-flow fan and a double entry cross-flow fan.
10. The rotating machine apparatus according to any preceding clause, wherein the heat exchanger comprises:
   an inlet housing coupled to the duct;
   an outlet housing in communication with an exterior of an outlet; and
   a plurality of tubes arranged between the inlet and the outlet housings in a substantially rectangular matrix.
11. The rotating machine apparatus according to any preceding clause, wherein the first section encompasses the cross-flow fan.
12. The rotating machine apparatus according to any preceding clause, wherein an air flow pathway is one of defined from the cross-flow fan, through the duct and to the inlet and defined from the inlet, through the duct and to the cross-flow fan.
13. The rotating machine apparatus according to any preceding clause, wherein the cross-flow fan comprises first and second cross-flow fans respectively mounted on the shaft proximate to the first and the second end wall, respectively.
14. A rotating machine apparatus, comprising:
   a housing having first and second opposing end walls and first and second opposing side walls extending between the first and second opposing end walls;
   a rotating machine disposed within the housing to drive rotation of a shaft;
   a cross-flow fan mounted on the shaft proximate to one of the first and second end walls;
   a heat exchanger disposed in thermal communication with the rotating machine and including an inlet disposed at an end of the first side wall, an outlet disposed at a corresponding end of the second side wall and a plurality of tubes coupled to the inlet and the outlet to define a plurality of pathways displaced from and extending transversely with respect to an axis of the cross-flow fan; and
   a duct having first and second transverse sections by which the cross-flow fan and the inlet are fluidly coupled.
15. The rotating machine apparatus according to any preceding clause, wherein the cross-flow fan comprises one of a single entry cross-flow fan and a double entry cross-flow fan.
16. The rotating machine apparatus according to any preceding clause, wherein the heat exchanger comprises:
   an inlet housing coupled to the duct to form the inlet; and
   an outlet housing to form the outlet in communication with an exterior of the outlet,
   the plurality of tubes being arranged between the inlet and the outlet housings in a substantially rectangular matrix.
17. The rotating machine apparatus according to any preceding clause, wherein the inlet and the outlet housings are substantially similarly shaped and parallel.
18. The rotating machine apparatus according to any preceding clause, wherein the first section encompasses the cross-flow fan.
19. The rotating machine apparatus according to any preceding clause, wherein an air flow pathway is one of defined from the cross-flow fan, through the duct and to the inlet and defined from the inlet, through the duct and to the cross-flow fan.
20. The rotating machine apparatus according to any preceding clause, wherein the cross-flow fan comprises first and second cross-flow fans respectively mounted on the shaft proximate to the first and the second end wall, respectively.

## Claims

1. A rotating machine apparatus (10), comprising:
a rotating machine (30) to drive rotation of a shaft (35);
at least one air flow generator (40) mounted on the shaft (35);
a heat exchanger (50) disposed in thermal communication with the rotating machine (30) and being formed to define a plurality of pathways (530) displaced from and extending transversely with respect to the at least one air flow generator (40); and
a duct (60) having first and second transverse sections (61, 62) by which the at least one air flow generator (40) and the heat exchanger (50) are coupled.

2. The rotating machine apparatus (10) according to claim 1, wherein the at least one air flow generator (40) is rotatable is first and second opposite directions and comprises at least one of a single entry cross-flow fan (401) and a double entry cross-flow fan (402).

3. The rotating machine (10) apparatus according to claim 1 or claim 2, wherein the heat exchanger (50) comprises:
an inlet housing (510) coupled to the duct (60);
an outlet housing (520) in communication with an exterior of an outlet; and
a plurality of tubes (53) arranged between the inlet and the outlet housings (510, 520) in a substantially rectangular matrix.

4. The rotating machine apparatus (10) according to any preceding claim, wherein the first section 61 encompasses the at least one air flow generator (40).

5. The rotating machine apparatus according to any preceding claim, wherein an air flow pathway is one of defined from the at least one air flow generator (40), through the duct (60) and to the inlet (51) and defined from the inlet (51), through the duct (60) and to the at least one air flow generator (40).

6. The rotating machine apparatus (10) according to any preceding claim, wherein the at least one air flow generator (40) comprises first and second cross-flow fans (403), (404) respectively mounted on the shaft (35) proximate to the first and the second end wall (21, 22), respectively.

7. The rotating machine apparatus (10) according to any preceding claim, wherein the at least one air flow generator (40) comprises a double entry cross-flow fan (402).

8. A rotating machine apparatus (10), comprising:
a housing (20) having first and second opposing end walls (21, 22);
a rotating machine (30) disposed within the housing (20) to drive rotation of a shaft (35);
a cross-flow fan (40) mounted on the shaft (35) proximate to one of the first and second end walls (21, 22);
a heat exchanger (50) disposed in thermal communication with the rotating machine (30) and being formed to define a plurality of pathways (530) displaced from and extending transversely with respect to an axis of the cross-flow fan (40); and
a duct (60) having first and second transverse sections (61, 62) by which the cross-flow fan (40) and the heat exchanger (50) are fluidly coupled.

9. The rotating machine apparatus according to any preceding claim, wherein the cross-flow fan (40) comprises at least one of a single entry cross-flow fan (401) and a double entry cross-flow fan (402).

10. The rotating machine apparatus (10) according to any preceding claim, wherein the heat exchanger (50) comprises:
an inlet housing (510) coupled to the duct (60);
an outlet housing (520) in communication with an exterior of an outlet (52);
and
a plurality of tubes (53) arranged between the inlet and the outlet housings (510, 520) in a substantially rectangular matrix.

11. The rotating machine apparatus according to any preceding claim, wherein the first section encompasses the cross-flow fan.

12. The rotating machine apparatus according to any preceding claim, wherein an air flow pathway is one of defined from the cross-flow fan, through the duct and to the inlet and defined from the inlet, through the duct and to the cross-flow fan.

13. The rotating machine apparatus according to any preceding claim, wherein the cross-flow fan comprises first and second cross-flow fans respectively mounted on the shaft proximate to the first and the second end wall, respectively.
